# EUROPEAN PATENT APPLICATION

(11) **EP 1 426 700 A1**
(43) Date of publication of application: **09.06.2004**
(21) Application number: 02760821.5
(22) Date of filing: 11.09.2002
(51) Int. Cl.: F24F 3/147

(54) **HUMIDIFIER AND AIR CONDITIONER USING THE HUMIDIFIER**

(30) Priority: 13.09.2001 JP 2001278171
(71) Applicant: Daikin Industries, Ltd., Osaka-shi, Osaka 530-8323 (JP)
(72) Inventor: TOKUI, Takashi, /o Shiga-seisakusho, Kusatsu-shi, Shiga 525-0044 (JP); YANO, Yukimasa, c/o Shiga-seisakusho, Kusatsu-shi, Shiga 525-0044 (JP); KAWASHIMA, Hitoshimo, c/o Shiga-seisakusho, Kusatsu-shi, Shiga 525-0044 (JP)
(74) Representative: HOFFMANN - EITLE
(86) International application number: PCT/JP2002/009249
(87) International publication number: WO 2003/025467

(57) **Abstract**

There are provided a humidifying rotor 11, an adsorption fan 13 provided on an adsorption passway A that goes through the humidifying rotor 11, a desorption fan 15 provided on a desorption passway B that goes through the humidifying rotor 11, and a heater 17 provided on the desorption passway upstream to the humidifying rotor 11. An absolute humidity adjustment means 33a of a humidifying operation control portion 33 controls number of revolution of the adsorption fan 13 such that relative humidity of humidified air detected by an inlet humidity sensor 21 becomes a target relative humidity RH. This provides a humidifier enabling easy prevention of dew condensation in a transportation line with easy constitution without increasing the thickness of an insulating material of the transportation line and without providing a heater or a drainage portion on the transportation line, and provides an air conditioner using the same.

## Description

### TECHNICAL FIELD

The present invention relates to a humidifier for feeding humidified air to the inside of a room, and to an air conditioner using the same.

### BACKGROUND ART

Conventionally, there has been a humidifier that takes moisture from the outside of a room and sends humidified air to the inside of the room. Such humidifier, which feeds humidified air from the outside to the inside of the room through a transportation line (humidifying duct and the like), suffers a serious problem that moisture condensation, i.e., dew condensation occurs inside the transportation line.

Accordingly, for solving the problem of dew condensation in the transportation line, there has been proposed a humidifier that is given increased insulation efficiency by increasing the thickness of an insulating material of the transportation line or that is equipped with a heater on the transportation line for warming humidified air.

An inventor of the present invention has proposed a humidifier that alternately iterates humidifying operation for blowing humidified air to the inside of a room through the transportation line and drying operation for blowing dried air to the transportation line, and a humidifier composed of a drainage portion for draining dew condensation water generated in the transportation line. (Note that these humidifiers are stated to help understanding of the present invention and these are not regarded as known technologies nor prior arts.)

However, the humidifier having the transportation line whose insulating material has an increased thickness suffers a higher cost and a problem of poor workability. The humidifier equipped with a heater on the transportation line has a problem that power consumption increases. The humidifier alternating the humidifying operation and drying operation has a problem that a decreased operation factor degrades humidifying ability. Further, the humidifier provided with the drainage portion suffers such problem that humidified air leaks from the drainage portion and residual moisture causes generation of mold.

### DISCLOSURE OF THE INVENTION

Accordingly, it is an object of the present invention to provide a humidifier enabling easy prevention of dew condensation in a transportation line with easy constitution without increasing the thickness of an insulating material of the transportation line and without providing a heater or a drainage portion on the transportation line, and to provide an air conditioner using the same.

In order to accomplish the above object, there is provided a humidifier for feeding humidified air from outside to inside of a room through a transportation line, comprising:
absolute humidity adjustment means for adjusting absolute humidity of the humidified air so as to prevent dew condensation in the transportation line.

In the above constitution, the absolute humidity of the humidified air is adjusted by the absolute humidity adjustment means so as to prevent dew condensation in the transportation line, which enables easy prevention of dew condensation in the transportation line with easy constitution without increasing the thickness of an insulating material of the transportation line and without providing a heater or a drainage portion on the transportation line.

Also, a humidifier of one embodiment comprises a humidity sensor of humidified air for detecting relative humidity of the humidified air in the transportation line, wherein
absolute humidity of the humidified air is adjusted by the absolute humidity adjustment means so that relative humidity of the humidified air in the transportation line detected by the humidity sensor of humidified air becomes equal to a target relative humidity or lower than the target relative humidity.

According to the humidifier of the above embodiment, absolute humidity of the humidified air is adjusted by the absolute humidity adjustment means so that relative humidity of the humidified air in the transportation line detected by the humidity sensor of humidified air becomes equal to the target relative humidity that does not cause dew condensation in the transportation line or lower than the target relative humidity, thereby ensuring prevention of dew condensation in the transportation line.

Further, a humidifier of one embodiment comprises an outdoor temperature sensor for detecting temperature of outdoor air;
an outdoor humidity sensor for detecting relative humidity of outdoor air; and
target relative humidity determination means for determining the target relative humidity based on temperature of outdoor air detected by the outdoor temperature sensor and relative humidity of outdoor air detected by the outdoor humidity sensor.

According to the humidifier of the above embodiment, it is possible, by experiments and the like, to obtain relation of temperature and absolute humidity of humidified air with respect to various conditions of temperature and relative humidity of outdoor air under a specified humidifying ability. Consequently, based on the temperature of outdoor air detected by the outdoor temperature sensor and the relative humidity of outdoor air detected by the outdoor humidity sensor, the target relative humidity that does not cause dew condensation in the transportation line is determined by the target relative humidity determination means, which makes it possible to obtain the target relative humidity that prevents dew condensation in the transportation line with more reliability.

Also, a humidifier of one embodiment comprises a temperature sensor of humidified air for detecting temperature of humidified air in the transportation line, wherein
absolute humidity of the humidified air is adjusted by the absolute humidity adjustment means so that temperature of the humidified air in the transportation line detected by the temperature sensor of humidified air becomes equal to target temperature corresponding to the target relative humidity that does not cause dew condensation in the transportation line or higher than the target temperature.

According to the humidifier of the above embodiment, the temperature corresponding to the relative humidity of humidified air that does not cause dew condensation in the transportation line being set to the target temperature, absolute humidity of the humidified air is adjusted by the absolute humidity adjustment means so that temperature of the humidified air in the transportation line detected by the temperature sensor of humidified air becomes equal to the target temperature or higher than the target temperature, which ensures prevention of dew condensation in the transportation line. Also, dew condensation in the transportation line may be prevented with use of an inexpensive temperature sensor without a humidity sensor for detecting relative humidity of the humidified air in the transportation line.

Also, a humidifier of one embodiment comprises an outdoor temperature sensor for detecting temperature of outdoor air; and
target temperature determination means for determining the target temperature based on temperature of outdoor air detected by the outdoor temperature sensor and temperature of the humidified air in the transportation line detected by the temperature sensor of humidified air under a specified condition of humidifying operation.

Therefore, in the humidifier of the above embodiment, it is possible, by experiments and the like, to obtain relation of relative humidity of humidified air with respect to the temperature and relative humidity of outside air under a specified condition of humidifying operation in advance. By utilizing the relation, relative humidity of outside air may be estimated based on the temperature of outside air and the temperature of humidified air in the transportation line under a specified condition of humidifying operation. When humidifying operation is actually performed at the estimated relative humidity of outside air, there is obtained a target temperature at which humidified air with relative humidity that does not cause dew condensation in the transportation line is obtained. Thus, there is obtained the target temperature that enables prevention of dew condensation in the transportation line with more reliability.

Also, a humidifier of one embodiment comprises a humidifying rotor;
an adsorption fan provided on an adsorption line that goes through the humidifying rotor;
a desorption fan provided on a desorption line that goes through the humidifying rotor; and
a heater provided upstream to the humidifying rotor on the desorption line, wherein
the absolute humidity adjustment means adjusts absolute humidity of the humidified air by controlling at least one of: number of revolution of the humidifying rotor; number of revolution of the adsorption fan; number of revolution of the desorption fan; input of the heater; on/off time of revolution of the humidifying rotor; on/off time of revolution of the adsorption fan; and on/off time of revolution of the desorption fan.

According to the humidifier of the above embodiment, increasing or decreasing the number of revolution of the humidifying rotor or switching the revolution on/off makes it possible to increase or decrease the amount of moisture absorbed into or desorbed from the humidifying rotor, which enables increase or decrease of the absolute humidity of humidified air. Increasing or decreasing the number of revolution of the adsorption fan or switching the revolution on/off makes it possible to increase or decrease the amount of moisture absorbed into the humidifying rotor, which enables increase or decrease of the absolute humidity of humidified air. Also, increasing or decreasing the number of revolution of the desorption fan or switching the revolution on/off makes it possible to increase or decrease the amount of moisture desorbed from the humidifying rotor, which enables increase or decrease of the absolute humidity of humidified air. Setting the input of the heater high or low makes it possible to increase or decrease the amount of moisture desorbed from the humidifying rotor, which enables increase or decrease of the absolute humidity of humidified air. Thus, the absolute humidity of humidified air may be easily adjusted by controlling: number of revolution of the humidifying rotor; number of revolution of the adsorption fan; number of revolution of the desorption fan; input of the heater; on/off time of revolution of the humidifying rotor; on/off time of revolution of the adsorption fan; or on/off time of revolution of the desorption fan. It is noted that two or more elements among the humidifying rotor, the adsorption fan, the desorption fan, and the heater may be controlled in combination.

Also, an air conditioner of the present invention uses the above humidifier.

According to the above-structured air conditioner, there is provided an air conditioner using the humidifier enabling easy prevention of dew condensation in the transportation line with easy constitution without increasing the thickness of an insulating material of the transportation line and without providing a heater or a drainage portion on the transportation line.

### BRIEF DESCRIPTION OF THE DRAWINGS

Fig. 1 is a block diagram showing main part of an air conditioner using a humidifier of a first embodiment of the present invention;
Fig. 2 is a flowchart showing operation of the humidifier;
Fig. 3 is a view showing changes of dry-bulb temperature and relative humidity of humidified air blowing out from the humidifier;
Fig. 4 is a flowchart showing operation of a humidifier included in an air conditioner using the humidifier of a second embodiment of the present invention; and
Fig. 5 is a view showing changes of dry-bulb temperature and relative humidity of humidified air blowing out from the humidifier.

### BEST MODE FOR CARRYING OUT THE INVENTION

Hereinbelow, the humidifier of the present invention and the air conditioner using the same will be described in detail in conjunction with the embodiment with reference to the drawings.

### (First Embodiment)

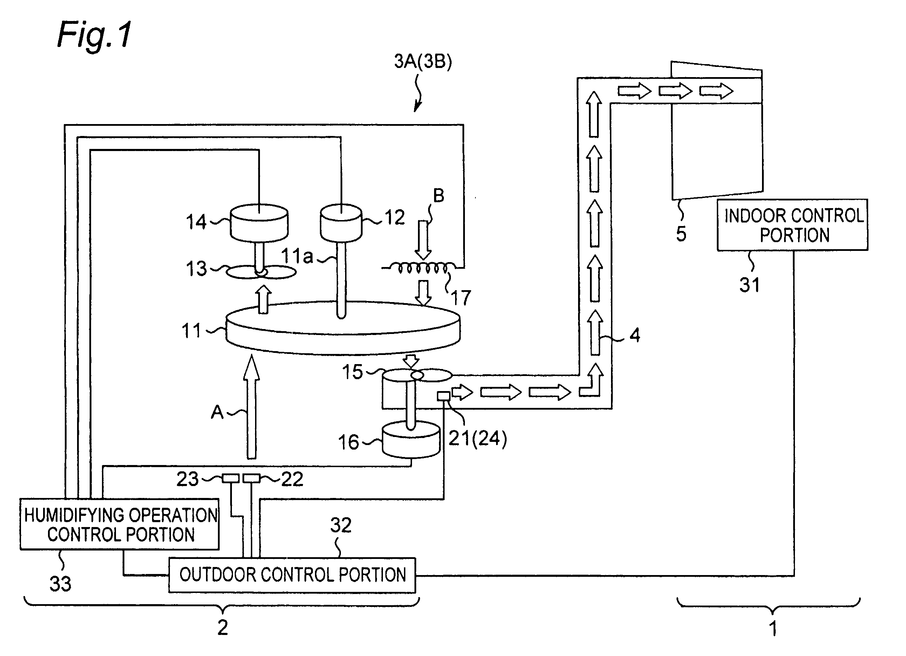

Fig. 1 is a block diagram showing main part of an air conditioner using a humidifier in a first embodiment of the present invention, in which the air conditioner includes an indoor unit 1, an outdoor unit 2, and a humidifier 3A disposed on the upper side of the outdoor unit 2. The indoor unit 1 and the humidifier 3A are connected via a humidifying duct 4 serving as a transportation line. The air conditioner using the humidifier 3A feeds humidified air from the humidifier 3A to the indoor unit 1 through the humidifying duct 4 for humidifying the inside of a room.

Also, the humidifier 3A includes a dish-shape humidifying rotor 11 disposed in a casing (unshown). The humidifying rotor 11 is structured such that an adsorbent such as silicagel, zeolite and alumina is formed, for example, in a honeycomb state or porous and multiparticle state, and is rotated about an axis 11a by a humidifying rotor motor 12. Further, the inside of the casing is divided by a partition plate (unshown) to form an adsorption passway A and a desorption passway B that pass through each part of the humidifying rotor 11. Downstream from the humidifying rotor 11 on the adsorption passway A, there are provided an adsorption fan 13 and an adsorption fan motor 14 for driving the adsorption fan 13. The humidifying rotor 11 absorbs humidity (absorbs moisture) from air flowing in the adsorption passway A in an arrow direction.

Downstream from the humidifying rotor 11 on the desorption passway B, there are provided a desorption fan 15 and a desorption fan motor 16 for driving the desorption fan 15 to suck and run air in an arrow direction. A heater 17 is provided in a portion of the desorption passway B upstream to the humidifying rotor 11. When air heated by the heater 17 goes through the humidifying rotor 11, the air is humidified by the humidifying rotor 11 (moisture is desorbed from the humidifying rotor 11). Thus, the moisture absorbed by the humidifying rotor 11 from the air in the adsorption passway A is desorbed by air heated by the heater 17, by which the air is humidified. Thus-humidified air is sent to a humidifying duct 4 by the desorption fan 15.

Also in Fig. 1, there are shown: an inlet humidity sensor 21 serving as a humidity sensor of humidified air disposed in the humidifying duct 4 in the vicinity of the downstream side of the desorption fan 15 for detecting relative humidity of humidified air in the inlet side of the humidifying duct 4; an outdoor temperature sensor 22 for detecting temperature of outdoor air; and an outdoor humidity sensor 23 for detecting relative humidity of outdoor air. Further, there are shown: an indoor control portion 31 for controlling an indoor fan (unshown) and the like; an outdoor control portion 32 for controlling a compressor (unshown) and the like upon reception of a signal from the inlet humidity sensor 21, the outdoor temperature sensor 22 and the outdoor humidity sensor 23; and a humidifying operation control portion 33 for controlling humidifying operation upon reception of a signal from the outdoor control portion 32. The humidifying operation control portion 33 includes an absolute humidity adjustment means 33a for adjusting absolute humidity of humidified air by controlling the humidifying rotor motor 12, the adsorption fan motor 14, the desorption fan motor 16 and the heater 17, and a target relative humidity determination means 33b for determining target relative humidity of humidified air on the inlet side of the humidifying duct 4.

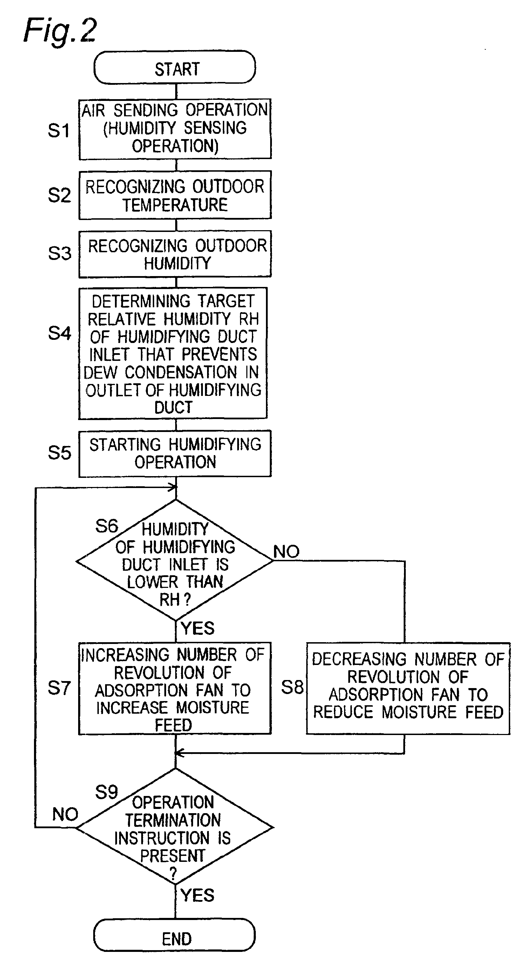

Fig. 2 is a flowchart showing humidifying operation processing of the humidifying operation control portion 33. Hereinbelow, description will be given of the humidifying operation processing that does not cause dew condensation in the humidifying duct 4 with reference to Fig. 2.

First, upon start of the processing, air sending operation is performed in step S1.

Next in step S2, outdoor temperature detected by the outdoor temperature sensor 22 is recognized, and in step S3, outdoor humidity detected by the outdoor humidity sensor 23 is recognized.

Next, the processing proceeds to step S4, in which based on the outdoor temperature and the outdoor humidity, the target relative humidity determination means 33b determines a target relative humidity RH of the inlet of the humidifying duct that prevents dew condensation in the outlet of the humidifying duct 4.

Next, the processing proceeds to step S5 where humidifying operation is started. In step S6, it is determined whether or not the humidity of the humidifying duct inlet detected by the inlet humidity sensor 21 is lower than the target relative humidity RH. If the humidity of humidifying duct inlet is determined to be lower than the target relative humidity RH, the processing proceeds to step S7, where number of revolution of the adsorption fan 13 is increased to increase moisture feed and the processing proceeds to step S9.

If the humidity of humidifying duct inlet is determined to be higher than the target relative humidity RH in step S6, the processing proceeds to step S8, where number of revolution of the adsorption fan 13 is decreased to reduce moisture feed and the processing proceeds to step S9.

Then in step S9, it is determined whether or not an operation termination instruction is present. If the operation termination instruction is determined to be present, the processing is terminated, whereas if the operation termination instruction is determined not to be present, the processing returns to step S6.

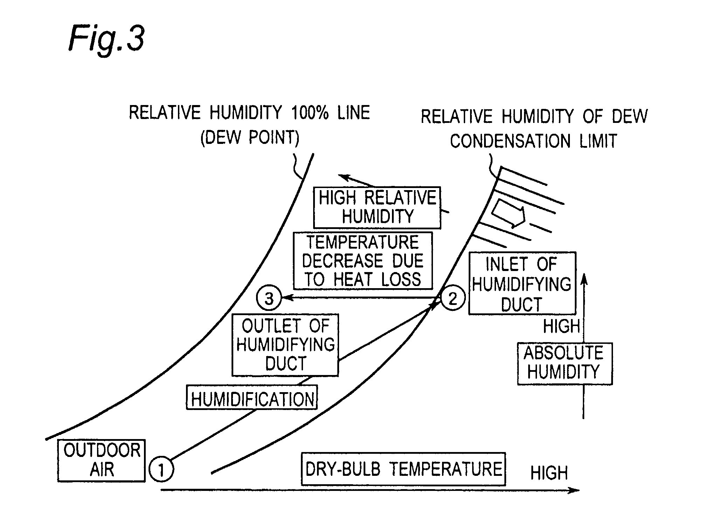

Fig. 3 is a view showing changes of dry-bulb temperature and relative humidity of humidified air blowing out from the humidifier 3A. By humidifying outdoor air (circled "1"), humidified air with high dry-bulb temperature and high absolute humidity reaches the inlet of the humidifying duct 4 (circled "2"). The temperature of the humidified air (circled "2") is decreased due to heat loss in the outlet of the humidifying duct 4, so that the relative humidity of humidified air in the vicinity of the outlet (circled "3") becomes higher than the humidified air in the inlet (circled "2"). Accordingly, the humidifier 3A controls the relative humidity of the humidified air in the inlet of the humidifying duct 4 (circled "2") so as to prevent the relative humidity of the humidified air in the outlet of the humidifying duct 4 (circled "3") from reaching a dew point (100% line). More particularly, the relative humidity of the humidified air in the inlet of the humidifying duct 4 (circled "2") is detected by the inlet humidity sensor 21, and it is arranged such that the detected relative humidity will not exceed a relative humidity of dew condensation limit, i.e., moisture condensation limit.

Herein, by an experiment, the relative humidity of dew condensation limit (relative humidity in the inlet of the humidifying duct 4) that prevents dew condensation in the outlet of the humidifying duct 4 is predetermined according to outdoor temperature and outdoor humidity. Then, the target relative humidity RH is set to be equal to or lower than the relative humidity of dew condensation limit so as to prevent dew condensation in the outlet side of the humidifying duct 4 which most tends to get dew condensation, by which dew condensation is prevented in the entire humidifying duct 4.

Thus, an air conditioner using the humidifier 3A enables easy prevention of dew condensation in the humidifying duct 4 with easy constitution without increasing the thickness of an insulating material of the transportation line or without providing a heater or a drainage portion on the transportation line. Also, compared to the humidifier that alternates drying operation and humidifying operation, the above humidifier achieves an increased operation factor by elimination of drying operation, thereby enabling increase of humidifying ability, and makes it possible to prevent generation of mold due to residual moisture by preventing dew condensation in the humidifying duct 4.

### (Second Embodiment)

Next, description will be given of an air conditioner using a humidifier in a second embodiment of the present invention. The humidifier of the second embodiment has constitution identical to the humidifier of the first embodiment except the inlet temperature sensor and the processing of the humidifying operation control portion. Accordingly, the identical component members are designated by identical reference numerals, and therefore description thereof is omitted and Fig. 1 is referred. In the humidifier of the second embodiment, there is disposed, instead of the inlet humidity sensor 21 shown in Fig. 1, an inlet temperature sensor 24 as a temperature sensor of humidified air in the vicinity of downstream side of the desorption fan 15 in the humidifying duct 4. Also, the humidifying operation control portion 33 is made up of an absolute humidity adjustment means 33a for adjusting absolute humidity of humidified air by controlling the humidifying rotor motor 12, the adsorption fan motor 14, the desorption fan motor 16 and the heater 17, and a target temperature determination means 33c for determining target temperature of humidified air on the inlet side of the humidifying duct 4.

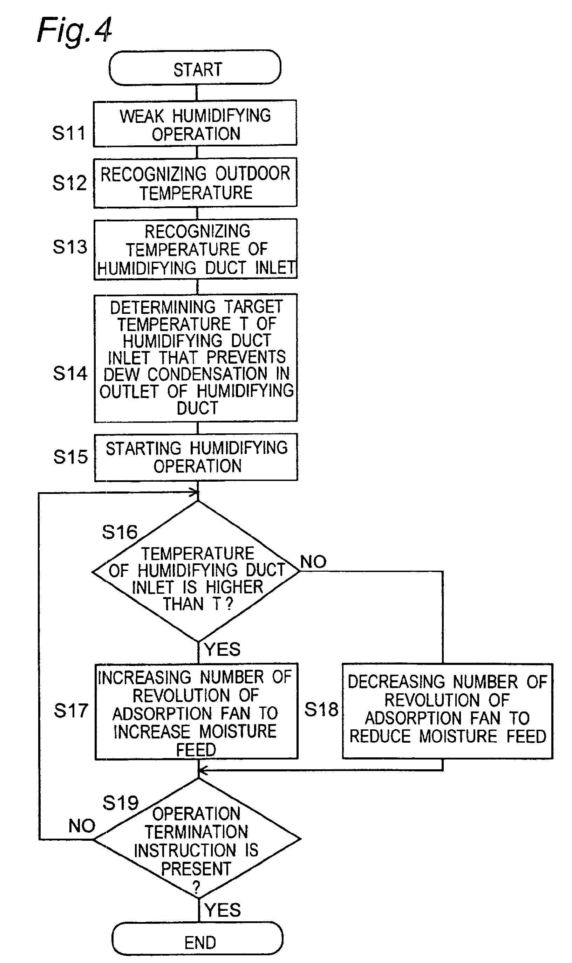

Fig. 4 is a flowchart showing operation of the humidifier 3B.

First, upon start of the processing, weak humidifying operation is performed in step S11. In this case, a humidifying amount is reduced from the amount in normal humidifying operation by reducing number of revolution of the humidifying rotor 11, reducing number of revolution of the desorption fan 15, lowering input of the heater 17, or reducing number of revolution of the adsorption fan 13.

Next, the processing proceeds to step S12, in which outdoor temperature detected by the outdoor temperature sensor 22 is recognized.

Next, the processing proceeds to step S13, in which temperature of the humidifying duct inlet detected by the inlet temperature sensor 24 in the humidifying duct 4 is recognized.

Next, the processing proceeds to step S14, in which based on the outdoor temperature detected by the outdoor temperature sensor 22 and the temperature of humidifying duct inlet detected by the inlet temperature sensor 24, the target temperature determination means 33c determines a target temperature T of the inlet of the humidifying duct that prevents dew condensation in the outlet of the humidifying duct 4.

Next, the processing proceeds to step S15 where humidifying operation is started. In step S16, it is determined whether or not the temperature of the humidifying duct inlet detected by the inlet temperature sensor 24 is lower than the target temperature T. If the temperature of humidifying duct inlet is determined to be lower than the target temperature T, the processing proceeds to step S17, where number of revolution of the adsorption fan 13 is increased to increase moisture feed and the processing proceeds to step S19.

If the temperature of humidifying duct inlet is determined to be higher than the target temperature T in step S16, the processing proceeds to step S18, where number of revolution of the adsorption fan 13 is decreased to reduce moisture feed and the processing proceeds to step S19.

Then in step S19, it is determined whether or not an operation termination instruction is present. If the operation termination instruction is determined to be present, the processing is terminated, whereas if the operation termination instruction is determined not to be present, the processing returns to step S16.

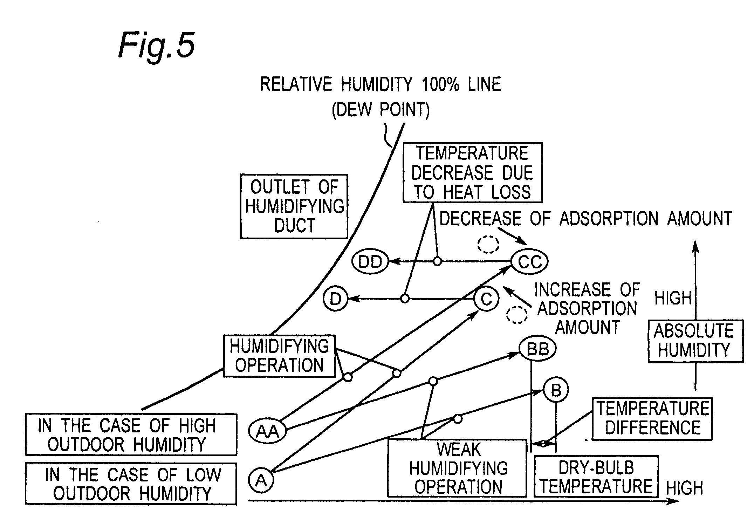

Fig. 5 is a view showing changes of dry-bulb temperature and relative humidity of humidified air blowing out from the humidifier 3B. Herein, description will be given of two conditions: outdoor air with low outdoor humidity (circled "A") and outdoor air with high outdoor humidity (circled "AA").

First in weak humidifying operation, by humidifying outdoor air (circled "A"), humidified air with high dry-bulb temperature and high absolute humidity (circled "B") reaches the inlet of the humidifying duct 4. Also in weak humidifying operation, by humidifying outdoor air (circled "AA"), humidified air with high dry-bulb temperature and high absolute humidity (circled "BB") reaches the inlet of the humidifying duct 4. Here, since lower outdoor humidity decreases a humidifying amount, the temperature of the humidified air (circled "B") is higher than the temperature of the humidified air (circled "BB").

* When normal humidifying operation is performed, outdoor air (circled "A") is humidified so that humidified air with high dry-bulb temperature and high absolute humidity (circled "C") reaches the inlet of the humidifying duct 4. In normal humidifying operation, outdoor air (circled "AA") is humidified so that humidified air with high dry-bulb temperature and high absolute humidity (circled "CC") reaches the inlet of the humidifying duct 4.

The temperature of the humidified air (circled "C") is reduced due to heat loss in the outlet of the humidifying duct 4, so that the relative humidity of humidified air in the vicinity of the outlet (circled "D") becomes higher than the humidified air in the inlet (circled "C"). The temperature of the humidified air (circled "CC") is reduced due to heat loss in the outlet of the humidifying duct 4, so that the relative humidity of humidified air in the vicinity of the outlet (circled "DD") becomes higher than the humidified air in the inlet (circled "CC").

Accordingly, the humidifier 3B controls the temperature of the humidified air in the inlet of the humidifying duct 4 (circled "C" and "CC") so as to prevent the relative humidity of the humidified air in the outlet of the humidifying duct 4 (circled "D" and "DD") from reaching a dew point (100% line). More particularly, the temperature of the humidified air in the inlet of the humidifying duct 4 (circled "C" and "CC") is detected by the inlet temperature sensor 24, and it is arranged such that the detected temperature will not become below a dew condensation limit temperature.

Increasing absolute humidity of humidified air to be fed to the inside of a room increases latent heat of moisture, i.e., vapor, among enthalpy of the air, so that the temperature, that is a sensible heat, tends to decrease. More particularly, number of revolution of the adsorption fan 13 is increased or number of revolution of the humidifying rotor 11 is increased without making large changes in flow rate by the desorption fan 15 and in heating amount by the heater 17 so as to increase the absolute humidity of humidified air to be fed to the inside of a room through the transportation line, as a consequence of which no considerable change in the enthalpy of the air to be fed is seen and temperature is decreased.

Herein, by an experiment, relation of outdoor humidity to the outdoor temperature and the temperature of humidified air in the inlet of the humidifying duct 4 in weak operation, that is a specified condition of humidifying operation, is examined in advance. With use of the relation, outdoor humidity is estimated based on the outdoor temperature and the temperature of humidified air in the inlet of the humidifying duct 4 in weak humidifying operation. When the estimated outdoor humidity is low, humidifying amount is to be decreased so that the dew condensation limit temperature is set low, whereas when the estimated outdoor humidity is high, humidifying amount is to be increased so that the dew condensation limit temperature is set high. Thus, the target temperature T is set to be equal to or higher than the dew condensation limit temperature so as to prevent dew condensation in the humidifying duct 4 on the outlet side that tends to cause dew condensation most, which prevents dew condensation in the entire humidifying duct 4.

Thus, an air conditioner using the humidifier 3B enables easy prevention of dew condensation in the transportation line with easy constitution without increasing the thickness of an insulating material of the transportation line or without providing a heater or a drainage portion on the transportation line. Also, compared to the humidifier that alternates drying operation and humidifying operation, the above humidifier achieves an increased operation factor by elimination of drying operation, thereby enabling increase of humidifying ability, and makes it possible to prevent generation of mold due to residual moisture by preventing dew condensation in the humidifying duct 4.

In the above first and second embodiments, number of revolution of the adsorption fan 13 is controlled for controlling an actuator that adjusts the absolute humidity of humidified air. However, control may be achieved by increasing or decreasing the number of revolution of, for example, the humidifying rotor 11 instead of the adsorption fan 13. It is noted that in the humidifier of the present invention, the absolute humidity of the humidified air may be adjusted by controlling at least one of: number of revolution of the humidifying rotor; number of revolution of the adsorption fan; number of revolution of desorption fan; and input of the heater.

Also in the above first and second embodiments, description has been given of the air conditioner using a humidifier. However, the humidifier of the present invention may be used in other heating apparatuses, and the present invention is also applicable to humidifiers and the like used as a stand-alone unit.

Also in the above first and second embodiments, the inlet humidity sensor 21 serving as a humidity sensor of humidified air and the inlet temperature sensor 24 serving as a temperature sensor of humidified air are disposed on the inlet side of the humidifying duct 4 serving as a transportation line. However, the humidity sensor of humidified air and the temperature sensor of humidified air may be disposed in the transportation line.

It is understood that without being limited to the constitution disclosed in the above first and second embodiments, the present invention may be applicable to humidifiers of other constitutions.

## Claims

1. A humidifier for feeding humidified air from outside to inside of a room through a transportation line (4), comprising:
absolute humidity adjustment means (33a) for adjusting absolute humidity of the humidified air so as to prevent dew condensation in the transportation line (4).

2. The humidifier as defined in Claim 1, further comprising:
a humidity sensor of humidified air (21) for detecting relative humidity of the humidified air in the transportation line (4), wherein
absolute humidity of the humidified air is adjusted by the absolute humidity adjustment means (33a) so that relative humidity of the humidified air in the transportation line (4) detected by the humidity sensor of humidified air (21) becomes equal to a target relative humidity or lower than the target relative humidity.

3. The humidifier as defined in Claim 2, further comprising:
an outdoor temperature sensor (22) for detecting temperature of outdoor air;
an outdoor humidity sensor (23) for detecting relative humidity of outdoor air; and
target relative humidity determination means (33b) for determining the target relative humidity based on temperature of outdoor air detected by the outdoor temperature sensor (22) and relative humidity of outdoor air detected by the outdoor humidity sensor (23).

4. The humidifier as defined in Claim 1 further comprising:
a temperature sensor of humidified air (24) for detecting temperature of humidified air in the transportation line (4), wherein
absolute humidity of the humidified air is adjusted by the absolute humidity adjustment means (33a) so that temperature of the humidified air in the transportation line (4) detected by the temperature sensor of humidified air (24) becomes equal to target temperature corresponding to the target relative humidity that does not cause dew condensation in the transportation line (4) or higher than the target temperature.

5. The humidifier as defined in Claim 4, further comprising:
an outdoor temperature sensor (22) for detecting temperature of outdoor air; and
target temperature determination means (33c) for determining the target temperature based on temperature of outdoor air detected by the outdoor temperature sensor (22) and temperature of the humidified air in the transportation line (4) detected by the temperature sensor of humidified air (24) under a specified condition of humidifying operation.

6. The humidifier as defined in Claim 1, further comprising:
a humidifying rotor (11);
an adsorption fan (13) provided on an adsorption line that goes through the humidifying rotor (11);
a desorption fan (15) provided on a desorption line that goes through the humidifying rotor (11); and
a heater (17) provided upstream to the humidifying rotor (11) on the desorption line, wherein
the absolute humidity adjustment means adjusts absolute humidity of the humidified air by controlling at least one of: number of revolution of the humidifying rotor (11); number of revolution of the adsorption fan (13); number of revolution of the desorption fan (15); input of the heater (17); on/off time of revolution of the humidifying rotor (11); on/off time of revolution of the adsorption fan (13); and on/off time of revolution of the desorption fan (15).

7. An air conditioner using the humidifier as defined in any one of Claims 1 to 6.
